# EUROPÄISCHE PATENTANMELDUNG

(11) **EP 0 962 634 A2**
(43) Veröffentlichungstag der Anmeldung: **08.12.1999**
(21) Anmeldenummer: 99890175.5
(22) Anmeldetag: 01.06.1999
(51) Int. Cl.: F02B 43/00

(54) **Einspritzsystem**

(30) Priorität: 05.06.1998 AT 38098
(71) Anmelder: AVL List GmbH, 8020 Graz (AT)
(72) Erfinder: Sams, Theodor, Dr., 8010 Graz (AT); Ofner, Herwig, Dipl.-Ing.Dr., 8114 Stübing (AT)
(74) Vertreter: Babeluk, Michael, Dipl.-Ing. Mag., Patentanwälte Babeluk - Krause

(57) **Zusammenfassung**

Die Erfindung betrifft eine Einspritzsystem (1, 100) für eine mit selbstzündendem Flüssiggas als Kraftstoff betriebene Brennkraftmaschine mit zumindest einer Einspritzeinrichtung (9, 109) pro Zylinder zur direkten Einspritzung des Kraftstoffes in den Brennraum, mit einem Kraftstoffbehälter (3, 101), in dem Kraftstoff unter einem Versorgungsdruck gehalten wird, mit einer Kraftstoffhochdruckpumpe (2, 106) zur Förderung des Kraftstoffes zur Einspritzeinrichtung (9, 109), wobei die druckführenden Teile des Einspritzsystems (1, 100) mit dem Kraftstoffbehälter (3,101) über Entlastungsleitungen (16, 16', 16a, 16b, 116, 116a) verbindbar sind. Um mit möglichst geringem Aufwand eine hohe Sicherheit zu erreichen, ist vorgesehen, daß eine Erwärmungseinrichtung (30, 130) vorgesehen ist, um zumindest abschnittsweise in druckführenden Teilen des Einspritzsystemes (1, 100) das Flüssiggas zumindest teilweise in eine gasförmige Phase überzuführen. Durch die entstehende Gasblase wird die flüssige Phase des Flüssiggases in den Kraftstoffbehälter (3,101) befördert.

## Beschreibung

Die Erfindung betrifft ein Einspritzsystem für eine mit selbstzündendem Flüssiggas als Kraftstoff betriebene Brennkraftmaschine mit zumindest einer Einspritzeinrichtung pro Zylinder zur direkten Einspritzung des Kraftstoffes in den Brennraum, mit einem Kraftstoffbehälter, in dem Kraftstoff unter einem Versorgungsdruck gehalten wird, mit einer Kraftstoffhochdruckpumpe zur Förderung des Kraftstoffes zur Einspritzeinrichtung, und einer Abschalteinrichtung, durch die druckführende Teile des Einspritzsystemes mit dem Kraftstoffbehälter über zumindest eine Entlastungsleitung verbindbar sind.

Konventionelle Einspritzsysteme sind entweder für die Einspritzung von selbstzündenden oder fremdgezündeten Flüssigkraftstoffen konzipiert. Derartige Kraftstoffe liegen bei Umgebungsdruck und Umgebungstemperatur in flüssiger Form vor, weshalb die Speicherung im Tank drucklos erfolgt. Üblicherweise wird dabei der flüssige Kraftstoff gleichzeitig als Schmiermedium für bewegliche Teile im Einspritzsystem verwendet, weshalb Leckagen und zum Tank zurückführende Leckölleitungen vorgesehen sind.

Die DE 35 23 855 A1 beschreibt ein Verfahren zum Betrieb einer Brennkraftmaschine mit einem aus Methanol erzeugten Spaltgas und Luft. Die Lagerung von Methanol erfolgt üblicherweise drucklos in herkömmlichen Vorratsbehältem. Das auch als Synthesegas bekannte Spaltgas, welches aus Wasserstoff und Kohlenmonoxyd besteht, wird bei dem zur Einblasung erforderlichen Druck in einen Vergasungsreaktor erzeugt, wobei der Einblasedruck im Bereich von 80 bis 100 bar liegt. Das Spaltgas wird dabei entweder durch Funken oder durch einen weiteren zündwilligen Kraftstoff, beispielsweise Dieselkraftstoff, entzündet. Bei Spaltgas handelt es sich nicht um ein selbstzündendes Flüssiggas. Das Spaltgas wird nicht in den Brennraum direkt eingespritzt, sondern unter Hochdruck indirekt in den Brennraum der Brennkraftmaschine eingeblasen. Ein derartiges Einblasesystem kann nicht zur direkten Einspritzung eines selbstzündenden Flüssiggases für eine mit Flüssiggas betriebene Brennkraftmaschine verwendet werden.

Es ist weiters bekannt, als Kraftstoff ein unter Druck gelagertes Flüssiggas zu verwenden. Im russischen Abstract SU 1040-206-A (Soviet Inventions Illustrated, Q53, 1984) wird eine gasbetriebene Brennkraftmaschine mit einem Kraftstofftank für verflüssigtes Gas, nämlich Butan, beschrieben, welches durch ein weiteres, komprimiertes Gas, nämlich Methan, druckbeaufschlagt wird. Herkömmliche Flüssiggase wie Propan oder Butan sind fremdgezündete Kraftstoffe, welche gasförmig und mit Luft vorgemischt in den Brcnnraum eingebracht werden (Ottomotoren-Kraftstoff).

Neuentwickelte Flüssiggaskraftstoffe mit hoher Cetanzahl, beispielsweise Dimethylether, weisen bei Umgebungstemperatur einen Dampfdruck unter 30 bar auf und können als selbstzündende Kraftstoffe eingesetzt werden. Aufgrund des hohen Dampfdruckes derartiger Flüssiggase besteht bei deren Verwendung in herkömmlichen Diesel-Einspritzsystemen, insbesondere in Bereichen lokaler Druckabsenkung, erhöhte Kavitationsgefahr, was zu Förderproblemen und zu verstärktem Verschleiß führt.

Da die selbstzündenden Flüssiggaskraftstoffe bei Umgebungsbedingungen verdampfen und mit Luft ein zündbares oder explosives Gemisch bilden können, muß ein Austreten des Kraftstoffes aus dem System in die Umgebung in jedem Fall unterbunden werden. Dies wird allerdings dadurch erschwert, daß im System ein hoher Standdruck herrschen muß, um den Kraftstoff in flüssigem Zustand zu halten. Besonders bei abgeschaltetem Motor stellt der im Einspritzsystem vorhandene Standdruck bei geringsten Undichtheiten ein gewisses Sicherheitsrisiko dar.

Aus der DE 196 11 434 A1 ist ein Einspritzsystem der eingangs genannten Art bekannt, bei dem zumindest ein druckführender Teil des Einspritzsystems über eine Abschalteinrichtung entlastbar ist. Die Abschalteinrichtung weist dabei einen Sammelbehälter auf, zu welchem von den druckführenden Teilen kommende Entlastungsleitungen führen. Der Sammelbehälter ist über ein Ventil und eine Fördereinrichtung mit dem Kraftstoffbehälter verbunden. Nach Abstellen des Motors wird das zwischen dem Niederdruckspeicher und der Kraftstoffördereinrichtung befindliche erste Ventil geschlossen und das zwischen den druckführenden Leitungsteilen und dem Sammelbehälter angeordnete zweite Ventil geöffnet. Dadurch wird der im System gebliebene flüssige Kraftstoff in den Sammelbehälter entleert, indem er bei niedrigem Druck im Sammelbehälter vergast. Die Fördereinrichtung verdichtet das Gas und fördert es in den Niederdruckspcichcr zurück, wodurch das Gas wieder verflüssigt wird. Wegen dem zusätzlichen Sammelbehälter ist diese bekannte Abschalteinrichtung allerdings relativ aufwendig.

Auch aus der AT 001 924 U2 ist ein ähnliches Einspritzsystem mit einem sogenannten "Purge-Tank", also einem drucklosen Speicher, bekannt, in welchen der Kraftstoff aus hochdruckführenden Teilen des Einspritzsystems nach dem Abstellen der Brennkraftmaschine abgelassen wird. Über eine Niederdruckpumpe und ein Rückschlagventil wird der Kraftstoff wieder in den Kraftstoffvorratsbehälter rückgeführt. Auch dieses Sytem ist vergleichsweise aufwendig im Bauvolumen und in der Steuerung.

Es ist die Aufgabe der Erfindung, diese Nachteile zu vermeiden und ein Einspritzsystem für selbstzündende Flüssigkraftstoffe der eingangs genannten Art weiterzuentwickeln, sodaß mit geringem Aufwand eine hohe Sicherheit erreicht wird.

Erfindungsgemäß erfolgt die Lösung dieser Aufgabe dadurch, daß zumindest eine Erwärmungseinrichtung vorgesehen ist, um zumindest abschnittsweise in druckführenden Teilen des Einspritzsystemes das Flüssiggas zumindest teilweise in eine gasförmige Phase überzuführen. Dabei ist vorgesehen, daß nach Abstellen der Kraftstoffördereinrichtung eine Strömungsverbindung zwischen zumindest einem druckführenden Teil des Einspritzsystems und dem Kraftstoffbehälter hergestellt wird, daß im druckführenden Teil durch zumindest abschnittsweise Erwärmung das Flüssiggas zumindest teilweise in eine gasförmige Phase übergeführt wird, so daß eine Gasblase entsteht, welche das verbliebene Flüssiggas aus dem druckführenden Teil in den Kraftstoffspeicher drückt und daß vorzugsweise die Strömungsverbindung zwischen dem druckführenden Teil und dem Kraftstoffbehälter wieder unterbrochen und insbesondere druckführende Teile des Einspritzsystems abgekühlt werden.

Nach dem Abstellen des Motors wird der flüssige Kraftstoff aus dem Einspritzsystem in den Kraftstoffbehälter, in dem der Kraftstoff im Siedezustand gehalten wird, zurückgeführt. Da sich im Behälter der Kraftstoff im Siedezustand befindet, wird durch den Druckausgleich nicht der gesamte flüssige Kraftstoff aus dem Einspritzsystem entfernt. Durch die erfindungsgemäß vorgesehene Erwärmung von druckführenden Teilen verdampft der Kraftstoff teilweise, wodurch sich zumindest eine Gasblase bildet, welche in dem geschlossenen System gehalten wird. Das Einspritzsystem sollte dabei so ausgeführt sein, daß sich die Gasblase an einer Stelle ausbildet, welche von der Rückführleitung in dem Tank möglichst weit entfernt ist. Dadurch, daß das Gas nicht entweichen kann, wird der Druck im System erhöht und die Druckerhöhung dazu benützt, um den Kraftstoff aus druckführenden Teilen in den Kraftstoffbehälter auszutreiben.

In einer bevorzugten Ausführungsvariante der Erfindung ist vorgesehen, daß durch die Erwärmungseinrichtung Abwärme der Brennkraftmaschine druckführenden Teilen des Einspritzsystemes zuführbar ist. Die Aufwärmung von druckführenden Teilen des Einspritzsystems kann dabei erfolgen, indem die Wärmeübertragung zwischen dem Motorgehäuse, beispielsweise den Zylinderblock der Brennkraftmaschine und bestimmten Teilen des Einspritzsystems gezielt verbessert wird. Dabei können z. B. Wärmebrücken zwischen dem Motorgehäuse und druckführenden Teilen eingesetzt werden.

Gemäß einer vorteilhaften Ausführungsvariante der Erfindung kann auch vorgesehen sein, daß die Erwärmungseinrichtung mit dem Kühlsystem der Brennkraftmaschine verbunden ist. Die Abwärme des Motors reicht bei betriebswarmer Brennkraftmaschine völlig aus, um in hochdruckführenden Teilen eine gasförmige Phase des Kraftstoffes zu bilden, welche den Kraftstoff in den Kraftstoffbehälter austreibt.

In weiterer Ausführung der Erfindung ist vorgesehen, daß die Erwärmungseinrichtung als externe Heizung, vorzugsweise als elektrische Heizung, ausgebildet ist. Dadurch ist es möglich, auch bei Abstellvorgängen des kalten Motors und bei niedriger Umgebungstemperatur die Sicherheitserfordernisse zu erfüllen und druck führende Teile des Einspritzsystemes zu entleeren.

Es hat sich als vorteilhaft gezeigt, wenn durch die Erwärmungseinrichtung druckführende Teile im Bereich der Einspritzeinrichtung erwärmbar sind. Bei Einspritzsystemen mit Einspritzeinrichtungen, bei denen die Schließkraft der Düsennadel durch eine Schließfeder in einen Federraum aufgebracht wird, hat es sich als äußerst vorteilhaft erwiesen, wenn durch die Erwärmungseinrichtung der Federraum der Einspritzeinrichtung erwärmbar ist. Sobald die flüssige Phase des Kraftstoffes aus dem Einspritzsystem entfernt ist, läßt man dieses abkühlen. Befindet sich in der Rückführleitung ein Rückschlagventil oder ein Schaltventil, welches ein Zurückströmen aus dem Kraftstoffbehälter in das Einspritzsystem verhindert, und ist das verbliebene Gas über die Siedetemperatur erwärmt, so wird durch den Abkühlvorgang der Druck im Einspritzsystem abgesenkt. Gegebenenfalls kann dabei vorgesehen sein, daß in zumindest einer unter Versorgungsdruck stehenden Rücklaufleitung und/oder in hochdruckführenden Teilen des Einspritzsystemes zumindest eine Kühleinrichtung angeordnet ist. Die Kühleinrichtung kann beispielsweise durch ein Gebläse bzw. durch einen Ventilator gebildet sein.

Durch die Erfindung werden somit folgende Vorteile erzielt:
1) Dadurch, daß (zumindest nahezu) der gesamte flüssige Kraftstoff aus dem System entfernt wird, befindet sich nach dem Austreibevorgang - wegen der geringen Dichte der Gasphase - nur mehr eine geringe Kraftstoffmasse im System und es kann daher bei eventuellen Undichtheiten nur mehr wenig Kraftstoff in die Umgebung bzw. in den Brennraum des Motors entweichen.
2) Die Absenkung des Druckes im Einspritzsystem durch den Abkühlvorgang verhindert ebenfalls den Leckagestrom bei eventuellen Undichtheiten des Systems.

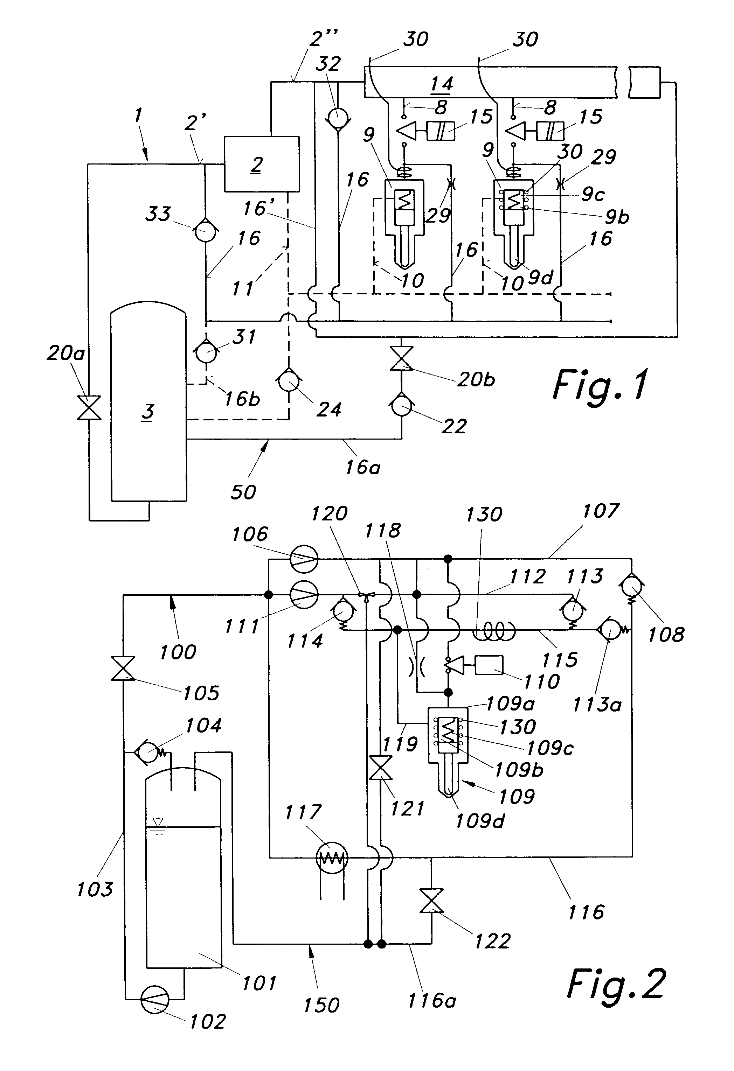

Die Erfindung wird im Folgenden anhand er Figuren näher erläutert. Es zeigen
Fig. 1 und Fig.2 schematische Ausführungsvarianten von erfindungsgemäßen Einspritzsystemen.

Die Fig. 1 zeigt ein erfindungsgemäßes Einspritzsystem 1 für eine Flüssiggasdirekteinspritzung. Die Kraftstoffhochdruckpumpe 2 fördert den Flüssiggaskraftstoff über einen Hochdruckverteilerspeicher 14 und Hochdruckleitungen 8 zu den einzelnen Einspritzeinrichtungen 9. Der Hochdruckverteilerspeicher 14 kann beispielsweise einen Druck von 200 bar aufweisen. Aufgrund der Eigenschaften des verwendeten Flüssiggases sind höhere Drucke im allgemeinen nicht erforderlich. In den vom Hochdruckspeicher 14 zu den Einspritzeinrichtungen 9 führenden Einspritzleitungen 8 sind über eine nicht weiter dargestellte Steuereinheit betätigte Einspritzsteuerventilc 15 vorgesehen, welche auch in die Einspritzeinrichtungen 9 integriert sein können.

Druckführende Teile des Einspritzsystemes 1, beispielsweise die Saugleitung 2' und die Druckleitung 2" der Kraftstoffhochdruckpumpe 2, sowie die Einspritzleitungen 8 sind über Entlastungsleitungen 16, 16a, 16b, 16' einer Abschalteinrichtung 50 druckentlastbar. Die Abschalteinrichtung 50 beinhaltet eine oder mehrere Erwärmungseinrichtungen 30, mit welcher die druckführenden Teile des Einspritzsystems 1 zumindest abschnittsweise erwärmt werden. Zur Abschalteinrichtung 50 gehören auch ein erstes und ein zweites Abschaltventil 20a und 20b.

Nach Abstellen des Motors wird das erste Abschaltventil 20a geschlossen, danach das zweite Abschaltventil 20b geöffnet und der im System gebliebene Kraftstoff in den als Niederdruckspeicher ausgeführten Kraftstoffbehälter 3 entleert, bis ein Druckausgleich zwischen dem Kraftstoffbehälter 3 und den druckführenden Teilen hergestellt ist. Die Austreibung des Kraftstoffes aus druckführenden Teilen des Einspritzsystems 1 wird wesentlich verbessert, indem hochdruckführende Teile des Einspritzsystems 1 zumindest abschnittsweise mit einer Erwärmungseinrichtung 30 auf eine Temperatur gebracht werden, bei der der im Einspritzsystem 1 verbliebene Kraftstoff ausdampft und sich zusätzlich zur flüssigen Phase eine gasförmige Phase bildet. Da das Einspritzsystem 1 im Ruhezustand ein geschlossenes System ist, kann die Gasblase nicht aus dem System entweichen. Die konstruktive Auslegung des Systems und die Anordnung der Erwärmungseinrichtung 30 sollte so gewählt werden, daß sich die Gasblase an einer Stelle ausbildet, welche von der Rückführung in den Kraftstoffbehälter 3 möglichst weit entfernt ist. Da die gasförmige Phase des Kraftstoffes nicht entweichen kann, wird der Druck im Einspritzsystem 1 erhöht und die Druckerhöhung dazu benützt, den flüssigen Kraftstoff in den Kraftstoffbehälter 3 über die Entlastungsleitungen 16, 16', 16a, 16b auszutreiben. Bildet sich die Gasblase an einer von den Entlastungsleitungen 16, 16', 16a, 16b weit entfernten Stelle aus, wird in erster Linie die flüssige Phase des Kraftstoffes in den Kraftstoffbehälter 3 ausgetrieben. Die Erwärmungseinrichtung 30 kann beispielsweise im Bereich der Federkammer 9b der Einspritzeinrichtung 9 vorgesehen sein, in welcher die Schließfeder 9c für die Düsennadel 9d angeordnet ist.

Sobald die flüssige Phase des Kraftstoffes aus druckführenden Teilen des Einspritzsystems 1 entfernt ist und vorteilhafterwise das verbleibende Gas über die Siedetemperatur erwärmt wird, läßt man dieses abkühlen. Befindet sich in der Rückführleitung 16 ein Rückschlagventil 22 bzw. ein Schaltventil 20b, welches ein Zurückströmen vom Kraftstoffbehälter 3 in druckführende Teile des Einspritzsystems 1 verhindert, so wird durch den nachträglichen Abkühlvorgang der Druck im Einspritzsystem 1 weiter abgesenkt.

Weitere funktionsbedingte Rückschlagventile sind mit Bezugszeichen 31, 32 und 33 versehen.

Werden als Kraftstoffhochdruckpumpe 2 und die Einspritzeinrichtungen 9 konventionelle Teile mit Rückflußleitungen 10, 11 verwendet, so können diese, eventuell über ein Rückschlagventil 24 mit dem Kraftstoffbehälter 3 verbunden sein, wie in der Fig. 1 strichliert dargestellt ist. Dadurch wird einerseits ein geschlossenes Kraftstoffsystem unter Verwendung von Elementen herkömmlicher Dieseleinspritzsysteme ermöglicht.

Bei der Ausführungsvariante von Fig. 2 liegt Kraftstoff in einem durch einen Niederdruckspeicher gebildeten Kraftstoffbehälter 101 vor. Eine Kraftstoffniederdruckpumpe 102 fördert Kraftstoff in eine Versorgungsleitung 103, die über ein Druckbegrenzungsventil 104 auf einem Druck von etwa 3 bis 10 bar über dem Dampfdruck im Kraftstoffbehälter 101 gehalten wird. Ein Regelventil 105 ermöglicht die Regelung der Kraftstoffzufuhr. Eine Kraftstoffhochdruckpumpe 106 fördert Kraftstoff in eine Kraftstoffhochdruckleitung 107, in der Kraftstoff mit einem Druck von etwa 250 bar vorliegt. Ein Druckbegrenzungsventil 108 regelt diesen Kraftstoffdruck, der gleichzeitig den Einspritzdruck darstellt. In der Fig. 2 ist exemplarisch ein einzige Einspritzeinrichtung 109 dargestellt. Es ist jedoch klar, daß entsprechend der Anzahl der Zylinder der Brennkraftmaschine mehrerer solcher Einspritzeinrichtungen 109 nebeneinander angeordnet sind. Für jede Einspritzeinrichtung 109 ist ein Einspritzsteuerventil 110, das als elektromagnetisch betätigbares Ventil ausgebildet ist, vorgesehen. Während des Einspritzvorganges öffnet dieses Einspritzsteuerventil 110, um den Kraftstoffzufuhranschluß 109a der Einspritzeinrichtung 109 mit Kraftstoff unter Einspritzdruck zu versorgen. Weiters steht mit der Versorgungsleitung 103 eine Kraftstoffmitteldruckpumpe 111 in Verbindung, die eine Steuerleitung 112 mit Kraftstoff versorgt, der unter einem Druck von etwa 30 bar steht. Ein Druckbegrenzungsventil 113 dient zur Einstellung des Steuerdrucks. Gegebenenfalls kann das Druckbegrenzungsventil 113 steuerbar ausgeführt sein, um den Steuerdruck entsprechend der jeweils gegebenen Anforderungen einstellen zu können. Ein weiteres Druckbegrenzungsventil 114 dient zur Versorgung einer Zirkulationsleitung 115 mit Kraftstoff. Die Zirkulationsleitung 115 steht mit einer Rücklaufleitung 116 in Verbindung, in der ein Kraftstoffkühler 117 angeordnet ist. Stromabwärts des Kühlers 117 mündet die Rücklaufleitung 116 in die Versorgungsleitung 103 ein.

Der Kraftstoffzufuhranschluß 109a der Einspritzeinrichtung 109 steht über eine Drossel 118 mit der Steuerleitung 112 in Verbindung. Über die Drossel 118 kann während der Zeiten, in denen keine Einspritzung erfolgt, der Druck in der Einspritzeinrichtung 109 auf den Steuerdruck abgebaut werden. Eine Rücklaufleitung 119 der Kraftstoffeinspritzeinrichtung 109 steht mit der Zirkulationsleitung 115 in Verbindung.

Ein Dreiwegeventil 120 dient einerseits zur Regulierung des Kraftstoffdurchflusses in der Steuerleitung 112 und in der Zirkulationsleitung 115 und andererseits dazu, ein Ablassen des Drucks in der Steuerleitung 112 während eines Stillstandes der Brennkraftmaschine durchführen zu können. Ein Ablaßventil 121 dient zum Druckabbau in der Hochdruckleitung 107, und ein Ablaßventil 122 dient zum Druckabbau in der Rücklaufleitung 116. Durch diese Ventile 120, 121, 122 kann daher beim Abstellen der Brennkraftmaschine das gesamte Kraftstoffsystem drucklos gemacht werden. Der Kraftstoff wird über diese Ventile 120, 121 und 122 in den Kraftstoffbehälter 101 abgelassen. Analog zu der in Fig. 1 gezeigten Ausführungsvariante werden bestimmte druckführende Teile des Einspritzsystems 100 über eine Erwärmungseinrichtung 130 auf eine Temperatur gebracht, bei der eine teilweise Verdampfung des Kraftstoffes eintritt und somit Kraftstoffdampfblasen entstehen. Die Kraftstoffdampfblasen bewirken eine Druckerhöhung und drücken den im Einspritzsystem 1 verbliebenen Kraftstoff über die Entlastungsleitung 116a zurück in den Kraftstoffbehälter 101.

Die Abschalteinrichtung 150 und das Einspritzsystem 100 sollte dabei so ausgeführt sein, daß vorzugsweise jene Stellen des Systems entleert werden, welche in Bezug auf die Leckage besonders kritisch sind, z. B. die Einspritzeinrichtungen 109.

Bei der in Fig. 2 dargestellten Variante bildet die Einspritzeinrichtung 109 durch das Einspritzsteuerventil 110, die Druckbegrenzungsventile 113, 113a, 114 und das Schaltventil 120 ein Teilsystem, welches separat über die Entlastungsleitung 116a entleert werden kann. In diesem Fall wird vorzugsweise die Zirkulationsleitung 115 beheizt, wodurch die Flüssigkeit über die Rücklaufleitung 119, die Federkammer 109b des Injektors, in welchem die Schließfeder 109c für die Düsennadel 109d angeordnet ist, entlang der Spalten an der nicht weiter bezeichneten Nadelführung der Einspritznadel 109d, der Düsenkammer, der Drossel 118 und des Dreiwegventiles 120 in den Kraftstoffbehälter 101 ausgetrieben wird.

Die Kraftstoffleitungen 107, 112 und 115 sind als Bohrungen in einer gemeinsamer Verteilerschiene ausgeführt. Dadurch ist ein intensiver Temperaturaustausch zwischen dem Kraftstoff, der in der Hochdrucklcitung 107 vorliegt, mit dem Kraftstoff, der in der Steuerleitung 112 und der in der Zirkulationsleitung 115 vorliegt, möglich. Daher wird der durch die Kraftstoffhochdruckpumpe 106 erwärmte Kraftstoff wirksam gekühlt. Es wäre an sich während des Betriebes möglich, den Kraftstoff aus der Rücklaufleitung 116 über die Entlastungsleitung 116a direkt in den Vorratsbehälter 101 rückzuführen, um eine Durchmischung mit dem dort vorliegenden Kraftstoff zu erzielen. Durch das Vorsehen des Kühlers 117 kann jedoch der Kraftstoff aus der Rücklaufleitung 116 wirksam abgekühlt werden und direkt der Hochdruckpumpe 106 bzw. der Mitteldruckpumpe 111 zugeführt werden. Die Fördermenge der Kraftstoffmitteldruckpumpe 111 wird so gewählt, daß Kraftstoff im Überschuß in die Steuerleitung 112 gefördert wird. Durch die entsprechende Einstellung der Druckbegrenzungsventile 113 und 114 wird in gleicher Weise eine dauernde Durchströmung der Zirkulationsleitung 115 erreicht. Auf diese Weise kann während des Motorbetriebes die Kühlung des gesamten Systems intensiviert werden.

Wärmeenergie zum Aufheizen des Kraftstoffes kann in beiden Ausführungsvarianten der Erfindung ggf. dem Motor entnommen werden, beispielsweise über das Kühlwasser, wenn das System nach einem längeren Motorbetrieb entleert wird. Für den Fall, daß das Einspritzsystem bei noch kaltem Motor entleert werden muß, ist es günstig, wenn die Erwärmungseinrichtung 30, 130 durch eine externe, beispielsweise elektrische Heizeinrichtung gebildet ist, wobei externe Energie, beispielsweise über die Batterie zugeführt wird.

Durch die Aufwärmung von druckführenden Teilen wird erreicht, daß fast der gesamte flüssige Kraftstoff aus dem Einspritzsystem 1 entfernt werden kann, sodaß bei eventuellen Undichtheiten nur gasförmiger Kraftstoff aus dem System in die Umgebung bzw. in den Brennraum des Motors entweichen kann, was wegen der geringen Dichte der Gasphase nur einer kleinen Kraftstoffmasse entspricht. Der nachträgliche Abkühlvorgang wirkt sich dabei ebenfalls vorteilhaft auf den Abbau des Druckes im Einspritzsystem 1 aus und vermindert ebenfalls den Leckagestrom bei eventuellen Undichtheiten.

## Patentansprüche

1. Einspritzsystem (1, 100) für eine mit selbstzündendem Flüssiggas als Kraftstoff betriebene Brennkraftmaschine mit zumindest einer Einspritzeinrichtung (9, 109) pro Zylinder zur direkten Einspritzung des Kraftstoffes in den Brennraum, mit einem Kraftstoffbehälter (3, 101), in dem Kraftstoff unter einem Versorgungsdruck gehalten wird, mit einer Kraftstoffhochdruckpumpe (2, 106) zur Förderung des Kraftstoffes zur Einspritzeinrichtung (3, 109), und einer Abschalteinrichtung, durch die druckführende Teile des Einspritzsystems (1, 100) mit dem Kraftstoffbehälter (3, 101) über zumindest eine Entlastungsleitung (16, 16', 16a, 16b, 116, 116a) verbindbar sind, **dadurch gekennzeichnet,** daß zumindest eine Erwärmungseinrichtung (30; 130) vorgesehen ist, um zumindest abschnittsweise in druckführenden Teilen des Einspritzsystems (1, 100) das Flüssiggas zumindest teilweise in eine gasförmige Phase überzuführen.

2. Einspritzsystem (1, 100) nach Anspruch 1, **dadurch gekennzeichnet**, daß durch die Erwärmungseinrichtung (30, 130) Abwärme der Brennkraftmaschine druckführenden Teilen des Einspritzsystemes zuführbar ist.

3. Einspritzsystem (1, 100) nach Anspruch 1 oder 2, **dadurch gekennzeichnet**, daß die Erwärmungseinrichtung (30, 130) mit einem Kühlsystem der Brennkraftmaschine verbunden ist.

4. Einspritzsystem (1, 100) nach Anspruch 1, **dadurch gekennzeichnet**, daß die Erwärmungseinrichtung (30, 130) als externe Heizung, vorzugsweise als elektrische Heizung, ausgebildet ist.

5. Einspritzsystem (1, 100) nach einem der Ansprüche 1 bis 4, **dadurch gekennzeichnet**, daß durch die Erwärmungseinrichtung (30, 130) druckführende Teile im Bereich der Einspritzeinrichtung (9, 109) erwärmbar sind.

6. Einspritzsystem (1, 100) nach Anspruch 5, mit zumindest einer einen Federraum (9b, 109b) aufweisenden Einspritzeinrichtung (9, 109), in welchem eine auf eine Düsennadel (9d, 109d) wirkende Schließfeder (9c, 109c) angeordnet ist, **dadurch gekennzeichnet**, daß durch die Erwärmungseinrichtung (30, 130) der Federraum (9b, 109b) der Einspritzeinrichtung (9, 109) erwärmbar ist.

7. Einspritzsystem (1, 100) nach einem der Ansprüche 1 bis 6, **dadurch gekennzeichnet**, daß in zumindest einer unter Versorgungsdruck stehenden Rücklaufleitung (116) und/oder in hochdruckführenden Teilen des Einspritzsystems (1, 100) zumindest eine Kühleinrichtung (117) angeordnet ist.

8. Verfahren zur Druckentlastung eines Einspritzsystems für eine mit selbstzündendem Flüssiggas als Kraftstoff betriebene Brennkraftmaschine nach einem der Ansprüche 1 bis 7, **dadurch gekennzeichnet**, daß nach Abstellen der Hochdruckpumpe (2, 106) eine Strömungsverbindung zwischen zumindest einem druckführenden Teil des Einspritzsystems (1, 100) und dem Kraftstoffbehälter (3, 101) hergestellt wird, daß im druckführenden Teil durch zumindest abschnittsweise Erwärmung das Flüssiggas zumindest teilweise in eine gasförmige Phase übergeführt wird, so daß eine Gasblase entsteht, welche das verbliebene Flüssiggas aus dem druckführenden Teil in den Kraftstoffspeicher (3, 101) drückt.

9. Verfahren nach Anspruch 8, **dadurch gekennzeichnet**, daß die Strömungsverbindung zwischen druckführenden Teilen und dem Kraftstoffbehälter (3, 101) unterbrochen und insbesondere druckführende Teile des Einspritzsystems (1, 100) abgekühlt werden.
